Europäisches Patentamt

European Patent Office

Office européen des brevets

(11) Publication number: **0 098 678**
**A2**

# EUROPEAN PATENT APPLICATION

(21) Application number: 83301560.5

(51) Int. Cl.³: **G 06 K 7/10**

(22) Date of filing: 21.03.83

(30) Priority: 01.07.82 AU 4670/82

(71) Applicant: **SUGAR RESEARCH LIMITED, Nebo Road, Mackay Queensland 4740 (AU)**

(43) Date of publication of application: 18.01.84 Bulletin 84/3

(72) Inventor: **Reichard, Stefan Roman, 28 Georgemilton Street, Mackay Queensland 4740 (AU)**

(84) Designated Contracting States: **AT BE CH DE FR GB IT LI NL SE**

(74) Representative: **Fentiman, Denis Richard et al, Elkington and Fife High Holborn House 52/54 High Holborn, London WC1V 6SH (GB)**

(54) **Article identification means.**

(57) Article indentification means are provided for sensing and deciphering signals emanating from, for example, labels such as barcode labels. The identification means includes sensing means (19) having a plurality of discrete sensing zones (21) each adapted to detect a portion or portions of the label (11). Deciphering means (20) are associated with the sensing means to decipher the label irrespective of alignment of the signal with the sensing means.

Title:  ARTICLE IDENTIFICATION MEANS

The present invention relates to article identification means.

Modern article identification means commonly employ automatic means for recognizing and recording articles whereby articles may be recorded in transit to prevent delays associated with manual recognition and recording of relevant pieces of information relating to the article.  Such automatic means may utilize barcodes on the article representing pertinent information and scanning means such as a light source, or a laser beam arranged to reflect a signal beam to scanning means adapted to decode the signal beam and provide a display or printout of the relevant information.

Such article identification means can be used for small or large articles including recognition of vehicles such as trucks and railway rolling stock.  In an alternate form of vehicle recognition or identification means a transponder having a coded characteristic adapted to be recorded upon passage past receiving means is provided on the vehicle,  whereby the coded characteristic, such as an electromagnetic signal, may be received and decoded to provide the necessary information.  The receiving means may be in the form of an antenna unit providing low powered beams of microwaves and the transponder unit may include a piece of waveguide fitted with an array of co-axial lines, each resonant at a specific frequency within the swept band of microwaves.

Each of the above types of systems have advantages and disadvantages.  For example, the transponder type units have the advantage of remaining accurate, in spite of ambient conditions such as the contamination of the parts with dirt.  However, they are expensive to construct and install and since the antenna unit has to be placed close to the transponder they are frequently situated in positions at which they may be easily damaged. Additionally, the characteristic of the transponder can not be changed on site and without the use of sophisticated apparatus.

The light scanning types of apparatus have the advantage that they may be less costly to install and that the barcode label utilized therewith may be easily and inexpensively varied. However, they have the disadvantages that their accuracy can be affected by the cleaniness of the barcode label and that the scanning means includes an optical system with variable geometry necessitating the use of movable mirrors and/or prisms arranged to scan the barcode label sequentially to provide a bit-sequential data stream from which characters can be decoded by further data processing circuitry. Such apparatus requires frequent maintenance and of course accuracy of manufacture is essential if effective operation is to be achieved. This adds greatly to the cost of the apparatus. Additionally, the scanning means can be expensive to service and vulnerable to physical abuse. Furthermore, the light source may be a high power light of limited life which has to be switched on and off mechanically by the passage of a coded article therepast. The mechanical switching means for actuating such lights are prone to failure. Alternatively, in a low powered light installation, the light source has to be maintained close to the barcode label and this of course is disadvantageous in many situations, such as in the recognition of railway rolling stock where recognition may have to take place as trains pass the scanning means at high speed.

The present invention aims to alleviate the disadvantages associated with such prior art devices and to provide article identification means which will be reliable and efficient in use.

According to the present invention there is provided article idenfification means for identifying a signal having a plurality of portions of information characteristic of an article to be identified, said identification means including signal sensing means having a plurality of discrete sensing zones each adapted to detect a portion or portions of said information and deciphering means associated with said sensing means for deciphering the detected signal.

Preferably, the number of sensing zones in the sensing means is greater than the number of portions of information in the identifying signal in order to allow for spatial misalignment of the sensing zones relative to the information zones.

A further aspect of the present invention provides article identification means including signal forming means for providing a plurality of portions of information characteristic of an article to be identified and sensing means having a plurality of discrete sensing zones each adapted to detect the presence of a portion or portions of said information and deciphering means associated with said sensing means for deciphering the detected signal.

A still further aspect of the present invention provides a method of identifying a moving article including the steps of:- providing an externally viewable coded label on said article, said coded label having a plurality of portions of information characteristic of said article; arranging optical sensing means in at least momentary optical alignment with the label, said sensing zones each adapted to detect a portion of said information and providing deciphering means to decipher the information gathered by said sensing means.

Another aspect of the present invention provides a method of identifying railway rolling stock including the steps of:- affixing a reflective barcode label to the stock to be identified; supporting optical sensing means at one side of the railway truck and in spaced relationship therewith, said optical sensing means being arranged for at least momentary optical alignment with said barcode label and having a plurality of discrete sensing zones each adapted to detect a portion or portions of said barcode label and providing deciphering means to decipher the monitored information gathered by said sensing means.

Preferably the sensing means includes a plurality of discrete sensing zones arranged in a preselected geometrical arrangement which is complementary to the geometrically coded signal whereby, in use, each sensing zone which may contain one or more sensors, receives a portion of information of the coded signal. The coded signal may be in the form of a geometric pattern having visible characteristics or other characteristics as desired. In the case of a visible signal it is preferred that the sensing means comprise a solid state device which may be in the form of photosensitive devices arranged in a selected geometrical array in optical alignment with the visible signal to operatively receive a geometrically coded light beam, encoded, for example, by the use of a barcode label or the like. In one preferred form the array is a linear array and the sensing means are an array of photosensitive devices. Of course, a geometric array, such as a linear array or a matrix, may be used if desired. If a linear array is used the axis of the linear array may be disposed orthogonally to the bars of the barcode. In a further form, several linear sensor arrays could be utilized. This would provide the ability to sense a two dimensional label

- 5 -

0098678

(ie. actual alphanumerical digits) rather than just one dimensional barcodes.

The encoded signal may be a signal emanating from the article or alternatively the signal may be a group of light beams reflected from a reflective barcode label. Preferably, the light source for the reflected light beams is associated with the receiving means, such as, by being integral therewith. The receiving means is preferably in the form of a lens assembly arranged with its operative focal plane coincident with the sensing means whereby the encoded image is admitted to the sensing means at the time of identification.

The array of sensors may be associated with electronic decoding circuitry adapted to decode the signal received by the array of sensors. The sensors may be interrogated sequentially or simultaneously or randomnly by the decoding circuitry to provide the necessary information for further processing by computers or for printout for video display means. Alternatively, each sensor or group of sensors may be adapted to trigger a separate display. Furthermore, an additional aspect of the present invention provides a method of identifying a geometrically coded article comprising the steps of:- providing a plurality of sensing means arranged to receive the geometrically coded signal from a coded article; providing interrogating means to operatively relay the signal from said sensing means to decoding means, and displaying the decoded signal. The article to be identified may be optically coded or electronically coded or otherwise as desired, and, of course, the sensing means are compatible with the coding means. Preferably, the sensing means are adapted to receive the geometrically coded signal as a simultaneous geometric array.

Embodiments of the present invention will now be described by way of example, with reference to the accompanying drawings which illustrate a typical installation utilizing the present invention adapted for identifying railway rolling stock, and wherein:

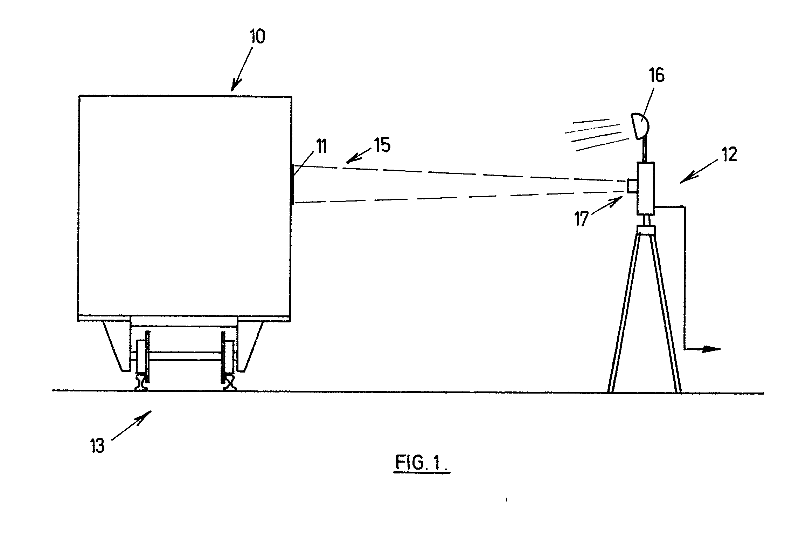

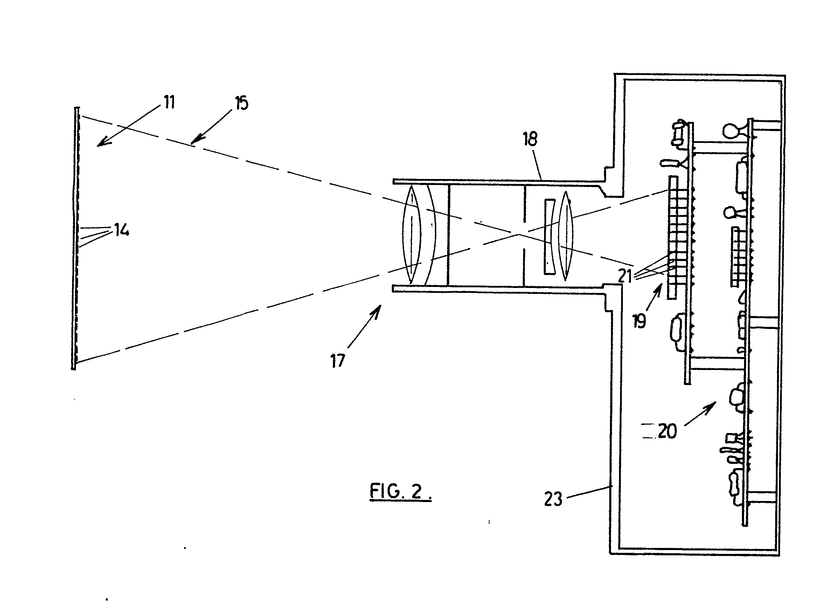

FIG. 1 is a diagrammatic view of a typical installation employing an embodiment according to the present invention;

FIG . 2 is a cut-away view illustrating the relationship between the optical and electronic components of the identification means of the embodiment of Fig. 1;

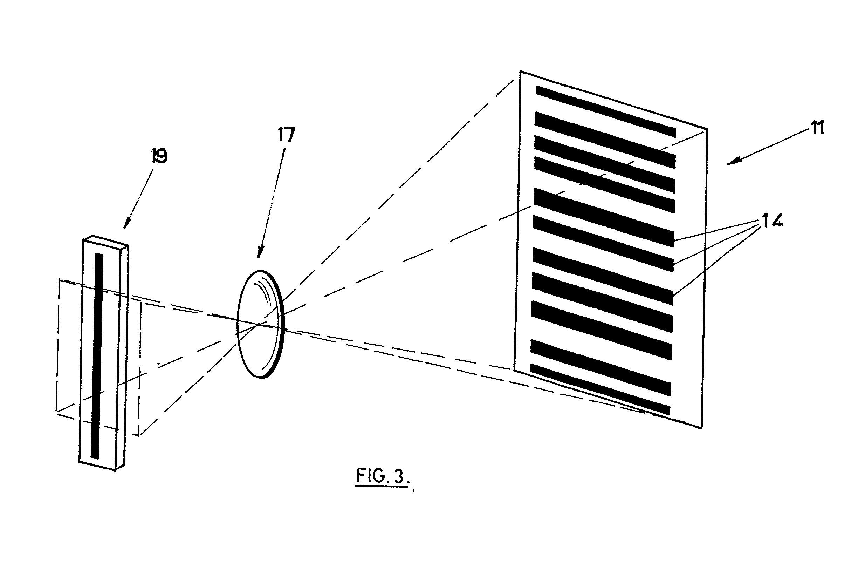

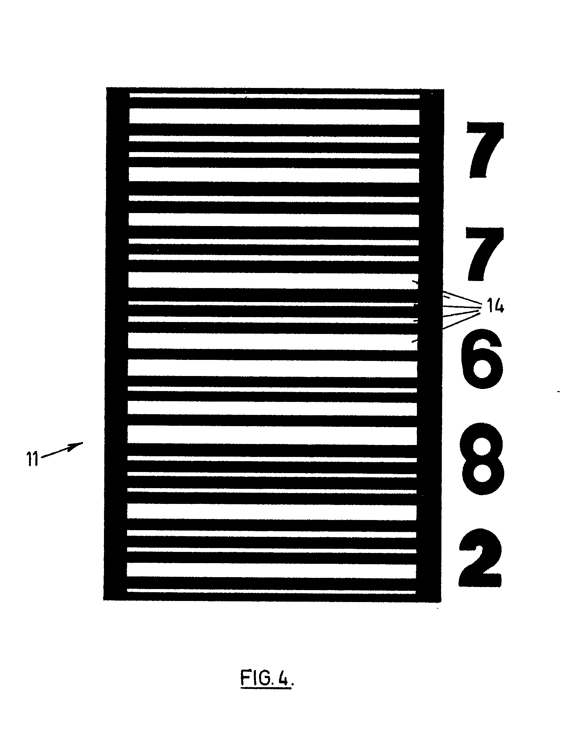

FIG. 3 is a perspective view illustrating the mode of signal encoding and decoding of the embodiments of Fig. 1, and

FIG. 4 illustrates a typical barcode label for use with the present invention.

An embodiment of article identification means is illustrated in the drawings as applied to the identification of a barcode label on a railway truck 10, but, of course, it may also be used on other moving or stationary articles as desired. As illustrated, the identification means are arranged to register a barcode label 11 fixed to the side of the truck 10 as it passes through the field of view of a camera assembly 12 supported adjacent the railway truck 13. The barcode label 11, a typical example of which is illustrated in Fig. 4, may include an array of dark and light bars arranged so as to represent encoded characters for identification purposes. The barcode label may be arranged in any selected orientation but it is preferred that it is arranged with the bars 14 disposed horizontally, whereby the bars do not pass sequentially through the field of view but instead pass simultaneously through the field of view, represented by the dotted outlines at 15. This configuration provides a relatively long time lapse during which the coded signal is transmitted to the camera assembly 12.

The bars 14 of the barcode label are suitably formed of reflective material whereby light from a lamp 16 supported on the camera assembly 12, or other light source, will be reflected from the barcode label to the lens assembly 17. The image from the lens assembly 17 is transmitted to or focussed upon a linear array 19 of photosensitive devices 21 disposed with the axis of the array at right angles to the bars 14 on the barcode label 11. The linear array 19 of devices 21 is disposed at the focal plane of the lens assembly 17, whereby the image of the barcode label is transmitted to the array of photosensitive devices 21 and the devices 21 either singly or in selected groups, simultaneously receive respective signal portions in accordance with the configuration of the bars on the barcode label. The linear array 19 is mounted in a housing 23 together with the lens assembly 17, whereby all ambient light, excluding the real image passing through the lens assembly 17, is shielded from the array 19. The array 19 is connected to electronic circuitry 20 which interrogates each photosensitive device 21 one at a time to provide a bit-sequential data stream which may be decoded for display or print-out as desired.

The linear array of photosensitive devices 21 may include solid state on-chip individual integrating capacitors and sequential addressing circuitry to provide the serial data for the decoding computer. Of course, electronic circuitry utilizing a charge coupled device may be used as components in the array of photosensitive devices which would then be sequentially interrogated. Of course, the sequential interrogation is provided to suit the decoding

0098678

electronics and is not an essential feature of the invention. For example, each device 21 could provide a separate display if desired, and all displays could occur simultaneously.

In use, embodiments of article identification means of the present invention may be utilized for identifying a moving article and for this purpose the line scan camera may be mounted remote from the article to be identified, for example, at a distance of several metres, the distance depending upon the power of the lamp or light source 16, the focal length and resolution of the lens assembly 17 and the sensitivity of the sensing means. Since the camera assembly 12 is adapted to receive the respective portions of the optical signal in block form as opposed to sequentially, the camera does not need to provide a lens assembly capable of accurately scanning the barcode label sequentially and recording the sequential image so received onto a single sensor. Thus the camera may be constructed robustly with fixed componentry. This greatly simplifies embodiments of the present invention compared with the prior art devices, especially in a case in which all its optical components are supported fixedly. Also as a result of such a configuration, it is believed that the maintenance required to maintain accuracy of operation over a long period of time will be reduced.

The portions of information could, for example, correspond to the respective bands of light spectrum and each sensing means or zone could be adapted to monitor a respective band of light whereby an article could be identified by reference to the monitored combination of light bands. In such instance, the bands of light could emanate from a diffracting medium on the article to be identified, as opposed to the use of a barcode label as described above.

From the above it will be understood that a barcode label may have a plurality of respective portions of information which together provide the required identification or information. This invention utilizes sensing means having a plurality of sensors, or sensing zones, each of which may singly or in groups be adapted to detect portions of the label. The respective portions of the label may be monitored simultaneously or sequentially or otherwise as desired.

Thus embodiments of this invention provide a multi-channel solid state sensing means which may be adapted to sense a single or multi-divisional label. Furthermore, it will be seen that there are many more sensors, for example 1028 in the described embodiment, than the number of portions of information on the identification means, ie., 26 in the described barcode label and, preferably, the projected image of the barcode or other label device is shorter than the sensing array to ensure that some variation in positioning of the barcode can be tolerated. At any one sensing of a label, only a portion of the sensors will be detecting the label. Thus spatial misalignment will not detract from the accuracy of operation of the identification means.

In order to improve further the reading success rate on damaged or dirty barcodes, the decoding electronics/computer may be modified to combine many partially successful barcode readings so as to obtain a successful reading.

0098678

CLAIMS

1.  Article identification means for identifying a signal having a plurality of portions of information characteristic of an article to be identified, said identification means including signal sensing means (19) having a plurality of discrete sensing zones (21) each adapted to detect a portion or portions of said information and deciphering means (20) associated with said sensing means (19) for deciphering the detected signal.

2.  Article identification means according to Claim 1, wherein said portions of information are in optical form.

3.  Article identification means according to Claim 1 or 2, wherein said portions of information are arranged in a preselected geometric pattern and said sensing zones (21) are arranged for operative optical alignment with respective said portions of information.

4.  Article identification means according to any one of Claims 1 to 3 wherein said portions of information are formed by groups of light beams emanating from a barcode label device.

5.  Article identification means according to any one of claims 1 to 4, wherein said sensing zones (21) are each constituted by one or more photosensitive devices.

6.  Article identification means according to Claim 5, wherein said photosensitive devices are arranged in a linear array (19).

7.  Article identification means including signal forming means (11, 16) for providing a plurality of portions of information characteristic of an article to be identified and sensing means (19) having a plurality of discrete sensing zones (21) each adapted to sense a said portion of information and deciphering means (20) associated with said sensing means (19)

0098678

for deciphering the monitored signal.

8. Article identification means according to Claim 7, wherein said signal forming means includes a reflective barcode label (11) having a plurality of spaced substantially parallel bars (14) and a light source (16) adapted to be supported remote from said barcode label (11) so as to reflect a coded light beam from said label to said sensing means (19), the latter being constituted by an array of photosensitive devices forming said discrete sensing zones (21) and arranged substantially at the focal plane of a lens assembly (17) for receiving said coded light beam.

9. Article identification means according to Claim 8, wherein said array (19) is a linear array extending substantially at right angles to said bars (14).

10. Article identification means according to Claim 8 or 9, wherein said lens assembly and said photosensitive devices are supported within a housing 23 which excludes all light other than said coded beam impinging on said array (19).

11. Article identification means according to any one of Claims 5, 6, 8, 9 and 10, wherein said deciphering means include decoding means (20) adapted to sequentially interrogate the respective photosensitive devices (21) to provide a bit-sequential data stream.

12. Article identification means according to any preceding to Claim, wherein the number of discrete sensing zones (21) is significantly greater than the number of portions of information on the identification means (11) and wherein the deciphering means (20) associated with the said sensing means (19) is arranged to correctly decipher the information regardless of variations in registration between portions of information and sensing zones (21).

13. Article identification means according to Claim 12, wherein the deciphering means 20 are adapted to assemble a complete set of identification characteristic encoded on an article identification means (11) from a plurality of partially deciphered sequences of signals derived from the sensing means (19).

14. A method of identifying a moving article including the steps of:- providing an externally viewable coded label (11) on said article (10), said coded label having a plurality of portions of information characteristic of said article; arranging optical sensing means (19) in at least momentary optical alignment with the label (11), said sensing means (19) having a plurality of discrete sensing zones (21) each adapted to detect a portion of said information and providing deciphering means (20) to decipher the detected information gathered by said sensing means (17, 19).

15. A method according to Claim 14, wherein said coded label (11) is a barcode label having a plurality of bars (14) arranged to lie substantially parallel to the direction of movement of said article.

16. A method according to Claim 14 or 15, wherein said optical sensing means are constituted by an array of photosensitive devices (21).

17. A method of identifying railway rolling stock including the steps of:- affixing a reflective barcode label (11) to the stock to be identified; supporting optical sensing means (19) at one side of the railway truck and in spaced relationship therewith, said optical sensing means (19) being arranged for at least momentary optical alignment with said barcode label and having a plurality of discrete sensing zones (21) each adapted to detect a portion of said barcode label (11) and providing deciphering means (20) to decipher the monitored information gathered by said sensing means (19).

FIG. 1.

FIG. 2.

FIG. 3.

FIG. 4.